**Europäisches Patentamt**

**European Patent Office**

**Office européen des brevets**

(19)

(11) Publication number: **0 191 701**
A2

# (12) EUROPEAN PATENT APPLICATION

(21) Application number: **86400313.2**

(22) Date of filing: **13.02.86**

(51) Int. Cl.⁴: **B 32 B 27/36**, B 32 B 27/30, B 65 D 1/26

(30) Priority: **15.02.85 JP 28014/85**

(43) Date of publication of application: **20.08.86**
**Bulletin 86/34**

(84) Designated Contracting States: **CH DE FR GB IT LI**

(71) Applicant: **NISSEI ASB MACHINE CO., LTD., 6100-1, Ohazaminamijo Sakakimachi, Hanishina-gun Nagano-ken (JP)**

(72) Inventor: **Nakamura, Yoshinori Nissei ASB Machine Co. Ltd., 6100-1, Ohazaminamijo Sakakimachi, Hanishina-gun Nagano-ken (JP)**
Inventor: **Orimoto, Hiroyuki Nissei ASB Machine Co. Ltd., 6100-1, Ohazaminamijo Sakakimachi, Hanishina-gun Nagano-ken (JP)**

(74) Representative: **Schrimpf, Robert et al, Cabinet Regimbeau 26, Avenue Kléber, F-75116 Paris (FR)**

(54) Biaxially oriented container having an excellent gas barrier property.

(57) One of this invention relates to a biaxially oriented container obtained by axially stretching and radially expanding an extruded or injection molded parison, the container being formed from a material for a container comprising a blend of a polyethyleneterephthalate resin and an ethylene vinylalcohol copolymer resin.

The other of this invention relates to a biaxially oriented multi-layer container obtained by axially stretching and radially expanding a parison having a three-layer section in which two kinds of synthetic resins are formed by extrusion or injection, the multi-layer container having an intermediate layer formed from a resin comprising a blend of a polyethyleneterephthalate resin and an ethylene vinylalcohol copolymer resin.

1.  TITLE OF THE INVENTION

BIAXIALLY ORIENTED CONTAINER HAVING AN EXCELLENT

GAS BARRIER PROPERTY

2.  BACKGROUND OF THE INVENTION

(1)  Field of the Invention

This invention relates to a biaxially oriented container obtained by stretching blow molding an extruded or injection molded parison.

(2)  Prior Art

Generally, even if a thin synthetic resin container is biaxially oriented, this container has a disadvantage in that it is inferior in gas barrier property to that of a glass container. This gas barrier property greatly differs according to the kind of resins. However, a polyethyleneterephthalate resin excellent in various performances as a material for containers has a limitation, and it has been found that the gas barrier property is most easily enhanced by forming a multi-layer of a resin suitable for a container material and a resin having an excellent gas barrier property.

Formation of a multi-layer of a container may be carried out by means similar to the case of molding a single layer container. A resin for forming a container is internally provided, as an intermediate layer, a resin having a gas barrier property, for example, a resin such as polyamide, ethylene vinyl alcohol copolymer.

A multi-layer container provided with the resin having a gas barrier property as an intermediate layer greatly increases in gas barrier property as compared with the single layer container. However, since properties of two kinds of resins used in the multi-layer container are different from each other, the property of adhesion between the inner and outer layers and the intermediate layer forming a container is poor and these layers are easily peeled by pressure externally of the container. In addition, where the container is filled with contents, gases from the contents whose permeation toward the outer layer is impeded by the intermediate layer stay in a boundary between the inner layer and the intermediate layer, and the two layers are peeled by the pressure of gases.

This peeling between the layers is liable to occur in bottles filled with carbonated drinks and the like. As the peeling between the layers progresses, carbon dioxide in the carbonated drinks escapes into walls of the bottle, which substantially exhibits the similar result to the case where the carbon dioxide escapes outside the bottle, thus making it impossible to obtain the good result

- 3 -    0191701

even if the intermediate layer is provided.

In view of the foregoing, an attempt has been made to provide adhesive layers on both sides of the intermediate layer. However, in such a case, wall portions of the bottle will be five layers to make it extremely difficult to mold a biaxially oriented container, giving rise to a problem of increasing cost.

### 3. SUMMARY OF THE INVENTION

This invention has been devised in an attempt to settle these problems noted above with respect to a thin biaxially oriented container. An object of the invention is to provide a biaxially oriented container in which in case of a single layer container, it has more excellent gas barrier property than that of a container which merely comprises a polyethyleneterephtalate resin, whereas in case of a multi-layer bottle provided with a resin having a gas barrier property as an intermediate layer, even if it is molded under the molding conditions for resins forming inner and outer layers, the adhesive property between the intermediate layer and the inner and outer layers is excellent, as a consequence of which the layers are hard to be peeled.

For achieving the aforementioned objects, according to one invention there is provided a biaxially oriented container obtained by axially stretching an extruded or injection-molded parison and radially expanding the parison, said container being formed by a container material comprising a blend of a polyethyleneterephthalate resin and an ethylene vinylalcohol copolymer resin.

According to the other invention, there is provided a biaxially oriented multi-layer container obtained by biaxially stretching a parison having a three-layer section formed by extruding or injecting two kinds of synthetic resins and radially expanding the parison, said multi-layer container having an intermediate layer formed by the resin comprising a blend of a polyethyleneterephthalate resin and an ethylene vinylalcohol copolymer resin.

### 4. BRIEF DESCRIPTION OF THE DRAWINGS

FIG. 1 is a front view showing a single layer biaxially oriented container according to the present invention, a part of which is longitudinally sectioned.

FIG. 2 is a front view showing a three-layer biaxially oriented container, a part of which is longitudinally sectioned.

### 5. DETAILED DESCRIPTION OF THE INVENTION

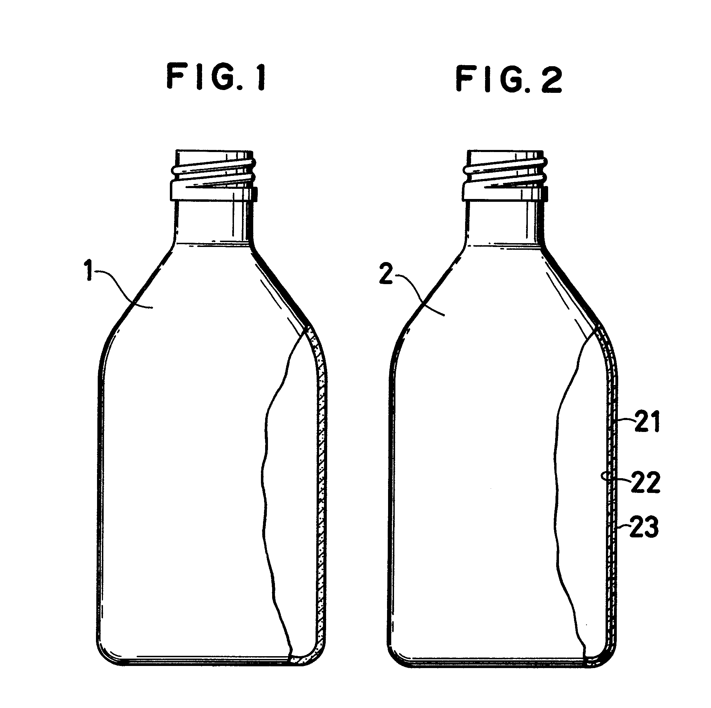

FIG. 1 shows a biaxially oriented container 1 of a single layer whose part is cutaway. This biaxially oriented container is formed by use of a container material comprising a blend of a polyethyleneterephthalate resin (PET) and an ethylene vinylalcohol copolymer resin (EVOH).

This container material principally comprises a polyethyleneterephthalate resin, to which is blended an ethylene vinylalcohol copolymer resin.

This single layer biaxially oriented container 1 may be molded by axially stretching, within a mold, an injected or extrusion-molded bottomed parison and radially expanding the parison by air pressure. However, the blending amount of the ethylene vinylalcohol copolymer resin is limited to and within a certain range, and if exceeding said range, heat resistance and impact resistance required as a packing container are remarkably deteriorated.

The ethylene vinylalcohol copolymer resin has more moisture absorption property than an ethyleneterephthalate resin, and when the amount of moisture absorption increases, the gas barrier property tends to deteriorate. Therefore, even if the amount of the ethylene vinylalcohol copolymer resin is increased for the purpose of increasing the gas barrier property, the expected result may not be obtained and conversely the characteristic thereof is lost due to the moisture absorption.

The amount of the ethylene vinylalcohol copolymer resin is in the range wherein all the said resin is surrounded by the polyethyleneterephthalate resin to be a main material by means of melting and blending and is not in direct contact with contents filled in the container, for example, preferably 2 to 20% (weight ratio).

FIG. 2 shows the state in which an intermediate layer 21 of a three-layer biaxially oriented container 2 is formed from the aforesaid container material. In this case, since an inner layer 22 and an outer layer 23 may be formed from a polyethyleneterephthalate resin, the moisture absorption of the ethylene vinylalcohol copolymer resin resulting from contact iwth the content need not be taken into consideration as in the case of the single layer. Therefore, the blending amount of the ethylene vinylalcohol copolymer resin with respect to the polyethyleneterephthalate resin may be increased to the range of from 5 to 50% (weight ratio). In addition, even if the blending amount is increased, the heat resistance, the impact resistance and the like of the container itself are secured by the polyethyleneterephthalate resin forming the inner and outer layers 22, 23, the conditions in terms of properties as a container is never lost.

This three-layer biaxially oriented container may be molded by use of conventional means for providing a container by axially stretching, within a blow mold, a parison having a three-layer section, which is formed by concentrically circularly injecting or extruding two kinds of resins into a mold, and radially expanding the parison by air pressure.

Moreover, since a material for the intermediate layer 21 principally comprises the same resin as the polyethyleneterephthalate resin forming the container, they become deposited each other and integrated when the parison is injected or extrusion-molded. For this reason, a boundary is not formed between the intermediate layer 21 and the inner and outer layers 22, 23, which are hard to be peeled even by reception of external pressure. The ethylene vinylalcohol resin is in the state embraced by the polyethyleneterephthalate resin and is completely cut off from the exterior of the container as well as the interior of the container. Further, even if the three-layer bottle has more blending amount than the case of the single layer, the deterioration of gas barrier property resulting from moisture absorption will not result.

In the following, embodiments and comparative example will be described.

It is to be noted that EVAL·E105 of EVOH (LTD.) KURARE was used.

Kind of Container: Bottle

Size of Container: 700 mℓ    470 cm$^2$ (surface area)

(1)   Single layer (FIG. 1)

Embodiment 1

- Resin in which 4% (weight ratio) of EVOH is blended into said PET

- Value of 100% $CO_2$ permeation:  0.800 c.c./24 hours (atm) Comparative Example 1

- PET 26 g, average wall thickness 304μ

- Value of 100% $CO_2$ permeation: 1.286 c.c./24 hours (atm)

(2)   Three-layer (FIG. 2)

Embodiment 2

- PET/PET · EVOH/PET (intermediate layer PET 94%, EVOH 6% weight ratio, average wall thickness 18μ)

- Value of 100% $CO_2$ permeation: 0.830 c.c./24 hours (atm)

- No peeling between layers resulting from external pressure is found.

Comparative Example 2

- PET/EVOH/PET (EVOH 100% of intermediate layer, average wall thickness 20μ)

- Value of 100% $CO_2$ permeation: 0.530 c.c./24 hours (atm)

- Peeling between layers resulting from external pressure is found.

The container according to the present invention is superior in gas barrier property to the case of a container merely comprising polyethyleneterephthalate, as described above.  In case of a multi-layer container, there exhibits an effect of increasing the gas barrier property because peeling between layers is hard to occur.

6. WHAT IS CLAIMED IS:

(1)  A biaxially oriented container having an excellent gas barrier property, said biaxially oriented container being obtained by axially stretching and radially expanding an extruded or injection molded parison, said container being formed from a material for a container comprising a blend of a polyethyleneterephthalate resin and an ethylene vinylalcohol  copolymer resin.

(2)  A biaxially oriented multi-layer container having an excellent gas barrier property, said biaxially oriented multi-layer container  (2) being obtained by axially stretching and radially expanding a parison having a three-layer  (21,23) section in which two kinds of synthetic resins are formed by extrusion or injection, said multi-layer container having an intermediate layer  (21) formed from a resin comprising a blend of a polyethyleneterephthalate resin and an ethylene vinylalcohol copolymer resin.

(3)  The biaxially oriented container having an excellent gas barrier property according to Claim 1, wherein said ethylene vinylalcohol copolymer resin is blended in weight ratio of from 2 to 20% with respect to the polyethyleneterephthalate resin.

(4)  The biaxially oriented container having an excellent gas barrier property according to Claim 2, wherein said ethylene vinylalcohol copolymer resin is blended in weight ratio of from 5 to 50% with respect to the polyethylene-terephthalate resin.

FIG.1

FIG.2

1

2

21

22

23